# EUROPÄISCHE PATENTSCHRIFT

(11) **EP 2 469 138 B1**
(45) Veröffentlichungstag und Bekanntmachung des Hinweises auf die Patenterteilung: **11.05.2016**
(21) Anmeldenummer: 11002204.3
(22) Anmeldetag: 17.03.2011
(51) Int. Cl.: F16K 31/122, F16K 31/126

(54) **Ventil mit einem Antriebsgehäuse**
Valve with an actuator housing
Soupape avec unn boitier d'actioneur

(30) Priorität: 22.12.2010 DE 102010055701
(43) Veröffentlichungstag der Anmeldung: 27.06.2012
(73) Patentinhaber: Bürkert Werke GmbH, 74653 Ingelfingen (DE)
(72) Erfinder: Kreß, Günter, 74653 Ingelfingen (DE)
(74) Vertreter: Prinz & Partner mbB

(56) Entgegenhaltungen:
- DE-U1-202009 007 123
- US-A1- 2010 072 410

## Beschreibung

Die Erfindung betrifft ein Ventil, das ein Antriebsgehäuseteil und ein im Wesentlichen rohrförmiges Zwischenstück aufweist.

Ventile sind üblicherweise aus einem Antrieb und einer Armatur, mit einem Ventilgehäuse für fluidische Anschlüsse, aufgebaut. Der Antrieb kann pneumatisch oder elektrisch sein. Häufig ist das Ventilgehäuse nicht direkt mit dem Antrieb verbunden, sondern über ein Zwischenstück, ähnlich einem Rohr. Im Stand der Technik wird das Rohr über eine Gewindeverbindung mit einem Antriebsgehäuse fest verbunden, was aufwendig und teuer ist.

Ein Ventil mit einem Zwischenstück zwischen Ventilgehäuse und Antriebsgehäuse ist beispielsweise in der DE 20 2009 007 123 U1 gezeigt.

In der US 2010/0072410 A1 ist ein Membranventil offenbart, mit einem Ventilantriebsgehäuse, das über ein Haubenbauteil, welches die Ventilmembran aufnimmt, mit dem Ventilgehäuse verbunden ist.

Deshalb ist es Aufgabe der Erfindung, ein Ventil mit einem Antriebsgehäuse und einem Rohr bereitzustellen, das einfach aufgebaut ist und kostengünstig in seiner Herstellung. Diese Aufgabe wird gelöst gemäß den Merkmalen des Anspruchs 1.

Ein erfindungsgemäßes Ventil weist ein Antriebsgehäuseteil auf, in dem in einer Stirnwand ein Durchbruch angeordnet ist, und ein im Wesentlichen rohrförmiges Zwischenstück, das mit einem Ende von außen durch den Durchbruch in das Innere des Antriebsgehäuseteils ragt. Das Ende des Zwischenstücks ist radial nach außen über einen den Durchbruch definierenden Rand und ein innenseitig, das heißt im Gehäuseinneren an der Stirnwand vorgesehenes Unterlegteil umgebördelt. Das hat den Vorteil, dass keine Gewinde zwischen Antriebsgehäuseteil und Zwischenstück benötigt werden. Die Fertigung erfindungsgemäßer Ventile ist material- und somit kostensparend, da ein geringerer Fertigungsaufwand und geringe Wandstärken der Einzelteile erforderlich sind, als wenn Gewinde vorgesehen sind. Die Verwendung eines Unterlegteils verhindert, dass während des Bördelprozesses unter der benötigten Krafteinwirkung durch ein entsprechendes Werkzeug der Durchbruch beschädigt werden könnte. Die Kraft wird so gleichmäßig auf die gesamte Oberfläche des Unterlegteils verteilt. Das Antriebsgehäuseteil ist auf dem Zwischenstück frei drehbar angeordnet. So können Steuerluftanschlüsse eines pneumatischen Antriebs in eine beliebige, wählbare Richtung gedreht und an ihre Einbauumgebung angepasst werden, sodass diese Anschlüsse zu einer Druckluftversorgung hinzeigen. Dadurch können die Verbindungswege zwischen Ventil und Druckluftversorgung so kurz wie möglich gehalten werden. In einer Ausführungsform ist das Unterlegteil plattenförmig ausgebildet. Ein plattenförmiges Unterlegteil zeichnet sich durch seine flache und platzsparende Geometrie aus, die die Kräfte gleichmäßig verteilt.

Es ist günstig, das Unterlegteil als Scheibe, insbesondere als Tellerfeder auszubilden. Die im montierten Zustand vorgespannte Feder schafft einen axialen Toleranzausgleich, wodurch eine stabile Verbindung zwischen dem Antriebsgehäuseteil und dem rohrförmigen Zwischenstück sichergestellt ist. Das ist besonders relevant für eine zuverlässige Dichtheit, wenn das Ventil pneumatisch angetrieben wird, also das Antriebsgehäuse mit Druckluft beaufschlagt wird. Ferner wird durch die Feder ein axiales Spiel verhindert, auch wenn das Gehäuseteil und das Zwischenstück zueinander verdrehbar sind.

In einer weiteren Ausführungsform ist an der Innenseite der Stirnwand des Antriebsgehäuseteils mindestens eine umlaufende Rippe zur Abstützung des Unterlegteils angeordnet. Diese Rippe kann massiv ausgebildet sein oder auch Aussparungen aufweisen, sodass das Unterlegteil nicht vollständig sondern abschnittsweise an der Rippe aufliegt. Die Rippe verhindert, dass ein eventuell möglicher scharfkantiger Rand der Tellerfeder sich in die Stirnwand des Antriebsgehäuseteils eingraben könnte, was zu einem Stabilitätsverlust des Antriebsgehäuseteils führen würde.

Das Antriebsgehäuseteil ist in einer vorteilhaften Ausführungsform als Topf, mit der Stirnwand und einer sich daran anschließenden zylindrischen Gehäusewand ausgebildet, wobei die zylindrische Gehäusewand und die Stirnwand insbesondere einstückig ineinander übergehen. Dadurch ist die Anzahl der Teile und Werkzeuge reduziert, was sich wiederum günstig auf die Herstellkosten auswirkt. Es ist aber auch möglich das Antriebsgehäuseteil mehrteilig zu fertigen, beispielsweise eine separate Stirnwand und eine zylindrische Gehäusewand vorzusehen, die miteinander fest verbunden, beispielsweise verschraubt oder verschweißt, werden.

Eine weitere Ausführungsform weist an der Stirnwand am Durchbruch einen nach außen weisenden, zylinderischen, axialen Fortsatz auf, der das Zwischenstück umgibt. Der Fortsatz dient dem rohrartigen Zwischenstück als Führung und trägt zur Stabilität des Ventils bei. An der nach außen weisenden Oberfläche des Fortsatzes können Schlüsselflächen, beispielsweise in Form eines Sechskants, angeordnet sein, sodass dort ein Werkzeug zum Öffnen eines montierten Ventils angreifen kann.

Vorteilhafterweise ist im Fortsatz mindestens eine Vertiefung zur Aufnahme eines Dichtelements vorhanden, das die Dichtheit vom Inneren des Antriebsgehäuses nach außen gewährleistet, was bei pneumatischen Antrieben und der dort erforderlichen Druckluftbeaufschlagung eine entscheidende Rolle spielt.

Eine Ausführungsform weist am Zwischenstück einen radial abstehenden, umlaufenden Vorsprung auf, der sich an einer Anlagefläche am Fortsatz abstützt. Zwischen dem Vorsprung und dem Ende des rohrartigen Zwischenstücks, das in das Antriebsgehäuseteil ragt, wird damit ein Verbindungsbereich auf dem Zwischenstück definiert, der vollständig vom Antriebsgehäuseteil umgeben ist.

Die Anlagefläche kann durch einen axial abschließenden Rand des zylindrischen Fortsatzes gebildet sein.

In einer Weiterbildung ist die Anlagefläche als Teil einer stufenartigen Vertiefung im Fortsatz am axialen Fortsatzende ausgebildet. Dadurch ist diese Anlagefläche klar definiert und wird durch zwei die Stufe begrenzende Flächen gebildet. Außerdem wird so der Vorsprung vom hülsenartigen Fortsatz überdeckt, was einerseits das optische Erscheinungsbild verbessert und anderseits zur Stabilisierung der Verbindung von Antriebsgehäuseteil und Zwischenstück beiträgt.

In einer Ausführungsform hat das Ende des Zwischenstücks, das ins Antriebsgehäuseinnere weist, eine niedrigere Wandstärke als ein daran angrenzender Rohrabschnitt, was den Umbördelvorgang erleichtert. Außerdem bildet der vorzugsweise stufenartige Übergang der Abschnitte mit höherer und niedrigerer Wandstärke für die Tellerfeder einen Anschlag.

Es ist günstig, das Antriebsgehäuse aus Kunststoff zu fertigen. Das Antriebsgehäuseteil kann als Spritzgussteil gefertigt werden, wodurch man eine große Freiheit bei der Formgebung hat.

In einer weiteren Ausführungsform stützt sich das Unterlegteil nur mit seinem radial äußeren Rand an der Stirnwand, beziehungsweise an der an der Stirnwand gebildeten Rippe ab. Der radial innere Rand des Unterlegteils liegt am umgebördelten Rohrende des Zwischenstücks an. Bei Verwendung einer Tellerfeder liegen diese beiden Ränder unter Ausbildung einer Vorspannkraft an den Abstützungen auf. Die Tellerfeder verläuft schräg von ihrem inneren zu ihrem äußeren Rand.

Weitere Merkmale und Vorteile der Erfindung ergeben sich aus der nachfolgenden Beschreibung unter Bezugnahme auf die beigefügten Zeichnungen. In den Zeichnungen zeigen:
- Figur 1 eine Seitenansicht eines erfindungsgemäßen Ventils; und
- Figur 2 ein Schnittbild durch ein Antriebsgehäuseunterteil und ein damit verbundenes Zwischenstück des Ventils nach Figur 1.

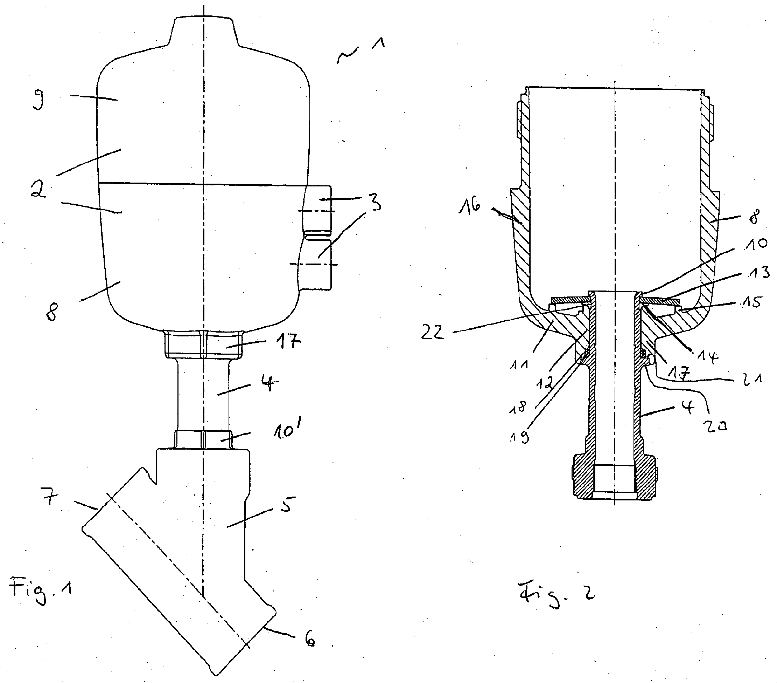

In Fig. 1 ist eine Seitenansicht eines pneumatisch angetriebenen Ventils 1 dargestellt. Das Ventil 1 umfasst ein Antriebsgehäuse 2 mit Steuerluftanschlüssen 3, ein rohrartiges Zwischenstück 4 und ein Fluidgehäuse 5 mit einem Eingang 6 und einem Ausgang 7. Eingang 6 und Ausgang 7 können miteinander vertauscht werden, je nachdem ob eine Untersitz- oder Übersitzanströmung gewünscht ist. Das Zwischenstück 4 verbindet das Antriebsgehäuse 2 mit dem Fluidgehäuse 5.

Das Antriebsgehäuse 2 ist mindestens zweiteilig aufgebaut mit einem topfförmigen Antriebsgehäuseteil 8 und einem das Gehäuseteil 8 schließenden Deckel 9. Ein erstes Ende 10' des Zwischenstücks 4 ist mit dem Fluidgehäuse 5 fest verbunden, beispielsweise verschraubt. Ein zweites Ende 10 des Zwischenstücks 4 ist mit dem Antriebsgehäuseteil 8 fest verbunden. Eine bevorzugte Ausführungsform der Verbindung ist in Fig. 2 als Schnittbild im Detail dargestellt.

Die funktionalen Ventilteile sind der Übersicht halber in den Zeichnungen nicht dargestellt. Sie entsprechen dem allgemeinen Stand der Technik und werden im Folgenden kurz beschrieben. Es handelt sich um einen beispielhaften, den Schutzumfang nicht einschränkenden Aufbau, der selbstverständlich auch anders gelöst sein kann. Zwischen dem Eingang 6 und dem Ausgang 7 ist ein Ventilsitz angeordnet, der durch ein Dichtelement geöffnet oder verschlossen werden kann. Im Antriebsgehäuse 2 ist eine elektrisch oder pneumatisch verschiebbare Betätigungseinrichtung angeordnet, die eine Spindel umfasst. Die Spindel ragt mit einem Ende in das Antriebsgehäuse 2, durchragt das Zwischenstück 4 und ragt mit ihrem zweiten Ende, das mit dem Dichtelement zusammenwirkt, in das Fluidgehäuse 5.

Fig. 2 zeigt ein Schnittbild durch das Antriebsgehäuseteil 8 und das damit verbundene Zwischenstück 4. Das Antriebsgehäuseteil 8 weist in einer Stirnwand 11 einen Durchbruch 12 auf, durch den das axiale Ende 10 des Zwischenstücks 4 in das Innere des Antriebsgehäuseteils 8 ragt. Innenseitig ist an der Stirnwand 11 ein Unterlegteil 13 angeordnet. Das Ende 10 des Zwischenstücks 4 ist radial nach außen über einen den Durchbruch 12 definierenden Rand 14 und das Unterlegteil 13 umgebördelt.

Das Unterlegteil 13 ist vorzugsweise plattenförmig ausgestaltet, was eine flache, platzsparende Bauweise bedingt. Es ist von Vorteil, die Geometrie des Unterlegteils 13 an die Antriebsgehäusegeometrie anzupassen, also beispielsweise bei einer im Wesentlichen zylindrischen Gehäusegeometrie eine Scheibe vorzusehen. So kann eine auf das Unterlegteil 13 ausgeübte Druckbelastung sich gleichmäßig verteilen, was sich günstig auf dessen Lebensdauer auswirkt. Es sind aber auch andere Geometrien für das Unterlegteil 13 möglich.

In der dargestellten Ausführungsform ist das Unterlegteil 13 eine Tellerfeder, welches sich mit seinem radial äußeren Rand an einer umlaufenden Rippe 15 abstützt, die an der Innenseite der Stirnwand 11 angeordnet ist. Mit seinem radial inneren Rand stützt sich das Unterlegteil 13 am umgebördelten Rand des Zwischenstücks 4 ab, welcher das Unterlegteil 13 axial gegen die Stirnwand 11 beziehungsweise die umlaufende Rippe 15 drückt. Auf diese Weise wird eine vorteilhafte Vorspannkraft bewirkt, die für einen Toleranzausgleich und Spielfreiheit sorgt und eine stabile Verbindung zwischen dem Antriebsgehäuseteil 8 und dem Zwischenstück 4 auch bei Druckluftbeaufschlagung gewährleistet. Die umlaufende Rippe 15 kann massiv ausgebildet sein oder Aussparungen aufweisen.

Das Antriebsgehäuseteil 8 ist vorzugsweise als Topf ausgebildet, wobei sich an die Stirnwand 11 eine zylindrische Gehäusewand 16 anschließt, wobei beide insbesondere einstückig ineinander übergehen. Das hat den Vorteil, dass dadurch die Gesamtteilezahl, aus der das Ventil aufgebaut wird, minimiert wird, was eine Kostenreduzierung bedingt. Das Antriebsgehäuseteil 8 kann aber auch mehrteilig, beispielsweise aus einem Boden und einer Gehäusewand zusammengesetzt werden, die miteinander fest verbunden werden. Das könnte in manchen Anwendungsfällen von Vorteil sein, beispielsweise bei einer spanenden Herstellung oder wenn bei einer Baureihe mit unterschiedlichen Ventilgrößen eventuell für alle Größen ein Gleichteil verwendet werden kann.

In der Ausführungsform gemäß Fig. 2 weist die Stirnwand 11 am Durchbruch 12 einen nach außen weisenden, zylindrischen, axialen Fortsatz 17 auf, der das Zwischenstück 4 umgibt. Der Fortsatz 17 stellt eine Verlängerung des Durchbruchs 12 dar, dient dem Zwischenstück 4 als Führung und trägt zur Stabilisierung der Verbindung von Antriebsgehäuseteil 8 und Zwischenstück 4 bei.

Im Fortsatz 17 ist vorteilhafter Weise mindestens eine ringförmige Vertiefung 18 zur Aufnahme eines Dichtelements 19 angeordnet. Das Dichtelement 19 dichtet das Antriebsgehäuse nach außen ab und gewährleistet dadurch einen störungsfreien Betrieb des Ventils.

Das Zwischenstück 4 weist einen radial abstehenden, umlaufenden Vorsprung 20 auf, der sich axial an einer Anlagefläche 21 am Fortsatz 17 abstützt. Vorzugsweise liegt der Vorsprung 20 auch seitlich am Fortsatz 17 an. Die Tellerfeder verspannt sich und die Stirnwand 11 zwischen dem Vorsprung 20 und dem umgebördelten Ende 10. Zwischen dem Ende 10 des Zwischenstücks 4 und diesem Vorsprung 20 erstreckt sich ein Verbindungsbereich, der vom Antriebsgehäuseteil 8 vollständig umgeben ist.

Die Anlagefläche 21 kann durch einen abschließenden Rand am Fortsatz 17 gebildet sein oder durch eine gezeigte stufenartige Vertiefung im Fortsatz 17 am Fortsatzende. Im letzteren Fall wird dann der Vorsprung 20 vollständig vom Fortsatz 17 überdeckt, das heißt er sitzt komplett im Vorsprung 20.

Das Antriebsgehäuseteil 8 ist vorteilhafterweise auf dem Zwischenstück 4 frei drehbar angeordnet. Das ermöglicht eine flexible Ausrichtung der Steuerluftanschlüsse beispielsweise in Richtung zur Druckluftversorgung.

Es ist ein gewisser Drehwiderstand sinnvoll, um die Drehausrichtung des Gehäuseteils 8 sicherzustellen.

Vorteilhafterweise weist das Ende 10 des Zwischenstücks 4 eine geringere Wandstärke auf als ein daran angrenzender Rohrabschnitt. Die geringere Wandstärke im Bereich 22 kann als kleine Einschnürung des Außendurchmessers am Ende 10 des Zwischenstücks ausgeführt sein. Dadurch werden die Montage und der Umbördelprozess erleichtert.

In einer bevorzugten Ausführungsform ist das Antriebsgehäuse aus Kunststoff gefertigt. Eine Herstellung im Spritzgussverfahren ermöglicht große Freiheitsgrade bei der Formgebung. Es ist aber auch möglich, metallische Antriebsgehäuse zu fertigen, falls dies aufgrund von Vorgaben betreffend chemische oder thermische Beständigkeit erforderlich ist.

## Patentansprüche

1. Ventil, mit einem Antriebsgehäuseteil (8), das in einer Stirnwand (11) einen Durchbruch (12) aufweist, und mit einem im Wesentlichen rohrförmigen Zwischenstück (4), das mit einem Ende (10) von außen durch den Durchbruch (12) in das Innere des Antriebsgehäuseteils (8) ragt, wobei innenseitig an der Stirnwand (11) ein Unterlegteil (13) vorgesehen ist und das Ende (10) des Zwischenstücks (4) radial nach außen über einen den Durchbruch (12) definierenden Rand (14) und über das Unterlegteil (13) umgebördelt ist, und wobei das Antriebsgehäuseteil (8) auf dem Zwischenstück (4) frei drehbar angeordnet ist.

2. Ventil nach Anspruch 1, **dadurch gekennzeichnet, dass** das umgebördelte Ende (10) das Unterlegteil (13) axial gegen die Stirnwand (11) drückt.

3. Ventil nach Anspruch 1 oder 2, **dadurch gekennzeichnet, dass** das Unterlegteil (13) plattenförmig ausgebildet ist.

4. Ventil nach einem der vorhergehenden Ansprüche, **dadurch gekennzeichnet, dass** das Unterlegteil (13) als Scheibe, insbesondere als Tellerfeder ausgebildet ist.

5. Ventil nach einem der vorstehenden Ansprüche, **dadurch gekennzeichnet, dass** an der Innenseite der Stirnwand (11) des Antriebsgehäuseteils (8) mindestens eine umlaufende Rippe (15) zur Abstützung des Unterlegteils (13) angeordnet ist.

6. Ventil nach einem der vorstehenden Ansprüche, **dadurch gekennzeichnet, dass** das Antriebsgehäuseteil (8) als Topf, mit der Stirnwand (11) und einer sich daran anschließenden zylindrischen Gehäusewand (16) ausgebildet ist, wobei die zylindrische Gehäusewand (16) und die Stirnwand (11) insbesondere einstückig ineinander übergehen.

7. Ventil nach einem der vorstehenden Ansprüche, **dadurch gekennzeichnet, dass** an der Stirnwand (11) am Durchbruch (12) ein nach außen weisender, zylindrischer, axialer Fortsatz (17) ausgebildet ist, der das Zwischenstück (4) umgibt.

8. Ventil nach Anspruch 7, **dadurch gekennzeichnet, dass** im Fortsatz (17) mindestens eine Vertiefung (18) zur Aufnahme eines Dichtelements (19) vorhanden ist.

9. Ventil nach einem der vorstehenden Ansprüche, **dadurch gekennzeichnet, dass** am Zwischenstück (4) ein radial abstehender, umlaufender Vorsprung (20) vorhanden ist, der sich an einer Anlagefläche (21) am Fortsatz (17) abstützt.

10. Ventil nach Anspruch 7 oder 8 und zusätzlich nach Anspruch 9, **dadurch gekennzeichnet, dass** die Anlagefläche (21) als Teil einer stufenartigen Vertiefung im Fortsatz (17) am Fortsatzende ausgebildet ist.

11. Ventil nach einem der vorstehenden Ansprüche, **dadurch gekennzeichnet, dass** das Ende des Zwischenstücks (4), das ins Antriebsgehäuseinnere weist, eine niedrigere Wandstärke aufweist als ein daran angrenzender Rohrabschnitt.

12. Ventil nach einem der vorstehenden Ansprüche, **dadurch gekennzeichnet, dass** das Antriebsgehäuse aus Kunststoff gefertigt ist.

13. Ventil nach einem der vorhergehenden Ansprüche, **dadurch gekennzeichnet, dass** sich das Unterlegteil (13) nur mit seinem radial äußeren Rand an der Stirnwand (11) abstützt.

## Claims

1. A valve comprising a drive housing part (8) which has an aperture (12) in a front wall (11), and a substantially tubular intermediate piece (4) which has an end (10) projecting through the aperture (12) from outside into the interior of the drive housing part (8), a shim part (13) being provided on the inside on the front wall (11), and the end (10) of the intermediate piece (4) being flanged radially outwards over a rim (14) defining the aperture (12) and over the shim part (13), and the drive housing part (8) being arranged so as to be freely rotatable on the intermediate piece (4).

2. The valve according to claim 1, **characterized in that** the flanged end (10) presses the shim part (13) axially against the front wall (11).

3. The valve according to claim 1 or 2, **characterized in that** the shim part (13) has a plate-shaped design.

4. The valve according to any of the preceding claims, **characterized in that** the shim part (13) is in the form of a washer, in particular of a disk spring.

5. The valve according to any of the preceding claims, **characterized in that** at least one circular rib (15) is arranged on the inner surface of the front wall (11) of the drive housing part (8) to support the shim part (13).

6. The valve according to any of the preceding claims, **characterized in that** the drive housing part (8) is in the form of a pot having the front wall (11) and an adjoining cylindrical housing wall (16), the cylindrical housing wall (16) and the front wall (11) more particularly continuing into each other in one piece.

7. The valve according to any of the preceding claims, **characterized in that** a cylindrical, axial extension (17) facing outwards is formed on the front wall (11) at the aperture (12) and surrounds the intermediate piece (4).

8. The valve according to claim 7, **characterized in that** at least one depression (18) is provided in the extension (17) to receive a sealing member (19).

9. The valve according to any of the preceding claims, **characterized in that** provided on the intermediate piece (4) is a radially protruding, circumferential projection (20) which rests against a contact surface (21) on the extension (17).

10. The valve according to claim 7 or 8 and additionally according to claim 9, **characterized in that** the contact surface (21) is formed as part of a step-like recess in the extension (17) at the end of the extension.

11. The valve according to any of the preceding claims, **characterized in that** the end of the intermediate piece (4) facing into the interior of the drive housing has a lower wall thickness than an adjacent tube section.

12. The valve according to any of the preceding claims, **characterized in that** the drive housing is made from a plastic material.

13. The valve according to any of the preceding claims, **characterized in that** only the radially outer rim of the shim part (13) is supported by the front wall (11).

## Revendications

1. Valve, comportant une pièce de boîtier d'entraînement (8) qui présente une percée (12) dans une paroi frontale (11), et comportant une pièce intermédiaire (4) sensiblement tubulaire qui fait saillie à une extrémité (10) depuis l'extérieur à travers la percée (12) et à l'intérieur de la pièce de boîtier d'entraînement (8), une pièce de calage (13) étant prévue du côté intérieur sur la paroi frontale (11) et l'extrémité (10) de la pièce intermédiaire (4) étant rabattue radialement vers l'extérieur sur un bord (14) définissant la percée (12) et sur la pièce de calage (13), et la pièce de boîtier d'entraînement (8) étant agencée librement mobile en rotation sur la pièce intermédiaire (4).

2. Valve selon la revendication 1, **caractérisée en ce que** l'extrémité rabattue (10) pousse la pièce de calage (13) axialement contre la paroi frontale (11).

3. Valve selon la revendication 1 ou 2, **caractérisée en ce que** la pièce de calage (13) est réalisée en forme de plaque.

4. Valve selon l'une des revendications précédentes, **caractérisée en ce que** la pièce de calage (13) est réalisée sous forme de disque, en particulier sous forme de ressort à disques.

5. Valve selon l'une des revendications précédentes, **caractérisée en ce qu'**au moins une nervure périphérique (15) pour le soutien de la pièce de calage (13) est agencée du côté intérieur de la paroi frontale (11) de la pièce de boîtier d'entraînement (8).

6. Valve selon l'une des revendications précédentes, **caractérisée en ce que** la pièce de boîtier d'entraînement (8) est réalisée sous forme de pot présentant la paroi frontale (11) et une paroi de boîtier (16) cylindrique se joignant à celle-ci, la paroi de boîtier (16) cylindrique et la paroi frontale (11) se fondant en particulier l'une dans l'autre d'un seul tenant.

7. Valve selon l'une des revendications précédentes, **caractérisée en ce qu'**un prolongement axial cylindrique (17) qui est dirigé vers l'extérieur et entoure la pièce intermédiaire (4) est réalisé sur la paroi frontale (11) au niveau de la percée (12).

8. Valve selon la revendication 7, **caractérisée en ce qu'**au moins un évidement (18) pour le logement d'un élément d'étanchéité (19) est présent dans le prolongement (17).

9. Valve selon l'une des revendications précédentes, **caractérisée en ce qu'**une saillie périphérique (20) qui est radialement en ressaut et qui prend appui sur une surface d'appui (21) sur le prolongement (17) est présente sur la pièce intermédiaire (4).

10. Valve selon la revendication 7 ou 8 et de plus selon la revendication 9, **caractérisée en ce que** la surface d'appui (21) est réalisée en tant que partie d'un évidement étagé dans le prolongement (17) à l'extrémité du prolongement.

11. Valve selon l'une des revendications précédentes, **caractérisée en ce que** l'extrémité de la pièce intermédiaire (4) qui est dirigée vers l'intérieur du boîtier d'entraînement présente une épaisseur de paroi inférieure à celle d'un tronçon tubulaire adjacent à celle-ci.

12. Valve selon l'une des revendications précédentes, **caractérisée en ce que** le boîtier d'entraînement est fabriqué en matière plastique.

13. Valve selon l'une des revendications précédentes, **caractérisée en ce que** la pièce de calage (13) prend appui sur la paroi frontale (11) uniquement par son bord radialement extérieur.
